Europäisches Patentamt

European Patent Office

Office européen des brevets

(11) Publication number: **0 302 702**
**A2**

# EUROPEAN PATENT APPLICATION

(21) Application number: 88307124.3

(22) Date of filing: 02.08.88

(51) Int. Cl.⁴: **F 16 B 5/06**
**B 62 D 25/20**

(30) Priority: 03.08.87 US 80850

(43) Date of publication of application:
08.02.89 Bulletin 89/06

(84) Designated Contracting States:
AT BE CH DE FR GB IT LI LU NL SE

(71) Applicant: **CHEMCAST CORPORATION**
**550 E. Mandoline**
**Madison Heights Michigan 48071 (US)**

(72) Inventor: **Patel, Praful J.**
**27812 Curtis Street**
**Livonia Michigan 48010 (US)**

(74) Representative: **Manley, Nicholas Michael et al**
**W.P. Thompson & Co. Coopers Building Church Street**
**Liverpool L1 3AB (GB)**

(54) Self locking and sealing plugs and method for making the same.

(57) The invention provides a self-locking, self-sealing plug (10) for filling and sealing an opening (16) in a panel and a continuous method for making the plug. The unitary plug (10) has the same shape as the opening (16) to be plugged and comprises a hard hole-filling, locking portion (20) united with a softer sealing portion (22) that is elastomeric and seals by contact with the entire inner periphery of the opening (16). The plug (10) is made from two different, chemically compatible thermoplastic materials by co-injection of the two molten components sequentially into a mould (72,72A; 74,74A) and cooling them concurrently to form the unitary plug (10).

[Fig-1

EP 0 302 702 A2

Bundesdruckerei Berlin

**Description**

## SELF LOCKING AND SEALING PLUG AND METHOD FOR MAKING THE SAME

The present invention relates to hole filling or plugging, self-locking and self-sealing plugs and to a method for making same.

In the manufacture of automobiles, refrigerators, stoves and other appliances there are metal panel portions such as automobile floor pans, door panels or other vertically oriented panels that contain openings, or holes, of various shapes and sizes to provide tool access therethrough so as to enable assembly of the panel to its supports or the attachment of other components of the automobile or appliance to an interior surface of a panel. After assembly, it is necessary to fill the opening to restore the original panel contour. Heretofore, metal plug stampings have been used and such stamped plugs have been fastened in place by hot melt adhesives, welding, brazing or by screws or the like through overlap portions of the replacement metal plug and the panel. Such metal replacements require preliminary fabrication of the replacement plugs and manual assembly which is disadvantageously time consuming, expensive and labour-intensive.

US- A- 4 081 879 discloses a grommet or plug button made from a hard locking portion, which locks against the panel surface surrounding the opening, and a softer sealing portion which seals the grommet in the opening by contact with the entire periphery of the opening. The hard locking and softer sealing plastic materials disclosed of the grommet of US- A- 4 081 879 comprise thermoplastic or thermosetting materials, or mixtures thereof, which are castable as plastisols such as vinyls and preferably polyvinyl chlorides. The grommet is formed by spraying the hard plastisol in an open mould, and after partial gellation, spraying the softer plastisol material in a mould in contact with the partially gelled hard part and then simultaneously curing the two plastisol materials at elevated temperatures to form a unitary grommet, or plug, structure. Vinyl plastisols are not satisfactory for making either the locking or sealing portion of the plugs of the present invention.

US- A- 3 753 549, US- A- 3 804 366 and US- A- 4 139 590 disclose a flow control device such as a damper, or heater, door for use in an air conditioning or heating duct and methods for making such devices. The damper doors of US- A- 3 753 549 and US- A- 3 804 366 are made from materials that are incapable of bonding together upon heating due to the chemical dissimilarity of the two materials. The disclosed hard material is a thermosettable epoxy hard material and the softer material is a thermoplastic vinyl plastisol. To overcome the bonding problem the method disclosed in US- A- 4 139 590 comprises premixing some of the vinyl plastisol into the epoxy hard portion before casting that mixture into a mould and thereafter floating more vinyl plastisol over the partially gelled premixture of epoxy-polyvinyl chloride plastisol and then curing those components together at elevated temperatures.

The present invention seeks to provide a non-metallic, easily installable plastic plug, which is less expensive than metal plugs to fabricate and install so as to plug and seal a panel opening and which can be safely used as a replacement for the heretofore used metal plugs in the manufacture of vehicles and appliances.

The present invention also seeks to provide a self-locking, self-sealing plastic plug, in any desired configuration, that is formed by sequential co-injection of two chemically compatible thermoplastic resinous materials into a single mould to form, upon cooling, a unitary plug comprising a hard, strong hole-filling and locking portion with metal-like properties and a softer resilient sealing portion that primarily seals the plug in the opening and makes contact with the peripheral surface of the opening and also prevents dislodgement of the plug from the opening due to forces applies in the same direction as the force applied to install the plug in the opening.

Further, the present invention seeks to provide a continuous production method of forming the improved plastic plugs of the present invention by sequential co-injection of two molten chemically compatible thermoplastic resinous materials into mating-multi-cavity moulds that upon cooling form the unitary plugs of the present invention.

According to one aspect of the present invention there is provided a self-locking and sealing plug wherein the locking portion has a continuous laterally and axially extending ridge portion which has a shape substantially similar to, and a lateral dimension larger than, the opening, said ridge portion tapers inwardly from said lateral dimension toward a narrow portion which has a lateral dimension smaller than said ridge portion, said sealing portion has a central surface portion which overlays said central portion of said locking portion, said central surface portion terminates at its periphery in an annular wing portion and comprises a sealing band surface located adjacent its periphery, which surface forms an axially extending continuation of said axially extending ridge portion, said annular wing portion extends outwardly and towards the panel from said sealing band surface and forms a secondary seal with the surface surrounding said opening when said plug is installed in the panel opening, said filling and locking portion comprises a thermoplastic polyolefin resinous material having a durometer hardness reading in the range of about 60 to about 110 Rockwell R, and in that said sealing portion comprises a thermoplastic elastomeric material comprising thermoplastic crystalline polyolefin resin and cured monoolefin copolymer rubber and having a durometer hardness reading in the range of about 55 Shore A to about 55 Shore D.

According to another aspect of the present invention there is provided a method for forming a plug of the present invention characterised by providing injection moulding means having a pair of injection units wherein the first of said units contains molten thermoplastic polyolefin resinous material having a durometer hardness reading at ambient temperature in the range of about 60 to about 110 Rockwell R and the second of said units contains molten thermoplastic elastomeric material consisting of a blend of thermoplastic crystalline polyolefin resin and cured monoolefin copolymer rubber and having a durometer reading at ambient temperature in the range of about 64 Shore A to about 50 Shore D, providing first mould means comprising a plurality of cavities configured to form said filling and locking portion of said plug when injected with said molten thermoplastic material from said first injection unit, providing second mould means comprising a plurality of cavities configured to form said sealing portion of said plug when injected with said molten thermoplastic material from said second injection unit; locating said second mould means adjacent to said first and said second injection units and connecting said second mould means to each of said units so as to enable injection of said thermoplastic materials from said units into said first and said second moulds when said first mould means is juxtaposed to and in engagement with said second mould means; moving said first mould means between a closed position in which said first mould means is juxtaposed to and in engagement with said second mould means, and an open position in which said first mould means is spaced from said second mould means, said first mould means being rotatable about the axis along which said first mould means moves between said closed and said open positions; injecting said molten thermoplastic material from said first injection unit into at least one cavity in said first mould means while said first and said second mould means are in a closed position, and injecting said molten thermoplastic material from said second injection unit into at least one cavity of said second mould means, said at least one second mould cavity being in juxtaposition with a mating cavity of said first mould means that contains a partially solidified locking portion of said plug; cooling said thermoplastic material in said at least one second mould cavity while in contact with said partially solidified locking portion in said cavity in said first mould means so as to unite said locking portion and said thermoplastic material injected into the juxtaposed cavity in said second mould means to thereby form said unitary plug, moving said first mould means from said closed position to said open position, rotating said first mould means 180° about said axis and moving said first mould from said open to said closed position and by repeating the steps comprising injecting said molten thermoplastic material through to rotating said first mould means.

The plug of the present invention is suitable for replacing the heretofore used metal plugs and eliminates much of the previously required labour cost, since it is fabricated from compatible plastic materials that are thermoplastic and chemically similar, and which plug is configured so as to be inserted into a hole or opening in a panel by snapping the plug through the opening so as to simultaneously lock the plug in place and seal it against the peripheral faces of the opening.

The plug is self-locking and self-sealing and is fabricated from injection-mouldable plastic components selected so as to provide all of the properties necessary to enable safe use in vehicles, etc., including high tensile and impact strengths, high resistance to dislodgement from concentrated forces applied to the central hole-filling portion of the plug from either side of the panel, high resistance to penetration or puncture particularly from an exterior applied force, and sealing for preventing leakage of moisture, gases or water through the opening.

The hole filling-locking portion is formed from a material having the requisite strength and hardness to make the plug self-locking and able to resist dislodgement and penetration, over the range of temperatures of intended use. The sealing portion is made from a material which is chemically compatible with that of the locking portion and which has the required resilience to permit sufficient deformation when pressed against the inner periphery of the opening to facilitate insertion of the unitary plug into the opening and to provide the requires sealing between the resilient peripheral portion of the plug and the inner peripheral surface of the panel opening in a manner generally similar to the sealing of the grommet of US- A- 4 081 879.

The method of this invention is a process of injection moulding two compatible thermoplastic materials into a mould so as to form, upon cooling, a unitary plug. The plug is fabricated from two separate but chemically compatible thermoplastic injection mouldable materials by co-injection, comprising the steps of injecting material having metal-like properties to form the hole filling and locking portions, slightly cooling the locking portion injecting the resilient softer material into the same mould into contact with the still hot locking portion so as to form the sealing portion and further cooling both portions to thus form the unitary dual durometer plug of the present invention.

The plug of the present invention differs structurally from the heater doors of US- A- 3 753 549 and US- A- 3 804 366 since the heater doors are flow control devices and have no hard locking portion. The damper doors are neither self-locking nor self-sealing nor intended to function to plug and permanently seal an opening in a panel. The co-injection method used in making the plugs of the present invention is basically dissimilar to the method disclosed in US- A- 4 139 590, in that, there is no step of premixing some of the softer plastic material into the hard thermosetting type resin prior to casting the mixture into the mould and no step of heating after casting in order to secure curing of the soft and harder portions.

The structure of the plugs of the present invention differs from the grommets and plug buttons disclosed in US- A- 4 081 879, in that the central portion of the plug of the present invention that fills the hole, or opening, in the panel and also locks the plug in place, has metal-like properties including a high degree of hardness, tensile strength and a high resistance to penetration, impact or rupture, whereas the hole filling portion of the grommet of US- A- 4 081 879 is the softer vinyl body portion which also functions as the resilient seal. When the structure disclosed in US- A- 4 081 879 comprises a grommet, the hard locking portion is formed of only an annular ring, and the central, hole-filling portion is formed of the softer vinyl body portion which includes at least one flexible snout having a central opening that extends through the soft portion and provides a support for wires, rods or the like, which extend through the panel opening. Also, when the structure disclosed in US- A- 4 081 879 comprises a plug button, the hard locking portion solely comprises an annular ring and the central hole filling portion is formed of the softer body portion which also provides a sealing action and which has a central portion devoid of snouts or openings for wires or the like (as in Fig. 4 of that document). The co-injection continuous process of the present invention is not disclosed in US- A- 4 081 879 and is different from the process of US- A- 4 081 879 which comprises spraying vinyl plastisols into a number of identical open-ended die moulds, positioned on a conveyor that delivers the plastisol filled moulds into a curing oven for curing and bonding the hard locking ring portion and the softer central body and sealing portion into a unitary grommet or plug button. In contrast, the co-injection process of the present invention, employs an injection moulding machine which first injects the molten thermoplastic material into a first mould cavity to form the hard hole-filling and locking material, then cools that injected portion material only slightly, indexes the mould into contact with a second mould cavity and injects molten, softer thermoplastic material into the second cavity to form the softer sealing portion and then further cools both the soft and hard injected materials so as to form the unitary plugs of the present invention.

The invention is described further hereinafter, by way of example only, with reference to the accompanying drawings, in which:-

    Fig. 1 is a perspective view of a broken away portion of a panel illustrating a partial cross-section of one embodiment of a plug according to the present invention, installed in place in an oblong shaped panel opening;

    Fig. 2 is a view of the underside of the plug of Fig. 1;

    Fig. 3 is a cross-section of the plug of Fig. 2 taken along the line 3-3;

    Fig. 4 is a view of the underside of another embodiment of a plug according to the present invention;

    Fig. 5 is a cross-section of the plug of Fig. 4 taken along the lines 5-5;

    Fig. 6 is a view of the underside of yet another embodiment of a plug according to the present invention;

    Fig. 7 is a cross-section of the plug of Fig. 6 taken along the lines 7-7;

    Fig. 8 illustrates a further embodiment of a plug according to the present invention;

    Fig. 9 is a cross-section of the plug of Fig. 8 taken along the lines 9-9;

    Fig. 10 is a perspective view of one embodiment of injection-moulding apparatus for use in accordance with the method of the present invention and showing the apparatus having its multi-cavity mould in its open position in which the movable mould half is shown in dotted lines;

    Fig. 11 is a front view of the rotatable multi-cavity mould shown in dotted lines in Fig. 10 and looking in the direction of the arrows 11-11 of Fig. 10, illustrating eight cavities for forming four oblong plugs of this invention, the cavities being shown empty;

    Fig. 12 is a front view of the fixed half of the multi-cavity mould support visible in Fig. 10, the cavities being shown empty; and

    Figs. 13 to 16 diagrammatically illustrate the sequential steps of the process of the present invention and the mould positions during start-up and continuous operation of the process of the present invention.

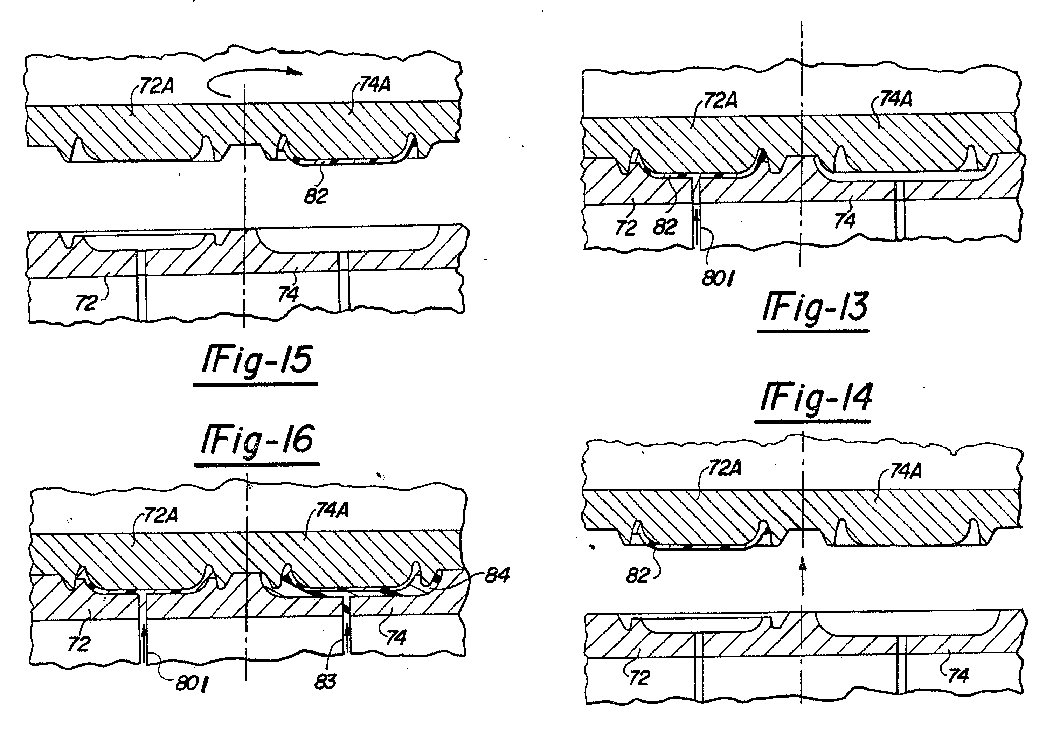

As will be further described below, Fig. 13 is a diagrammatic sectional view looking down and taken along the line 13-13 of Fig. 10, illustrating the movable mould of Fig. 11 in closure with the fixed mould half of Fig. 12 and showing the first step at start-up of the injection process which injects hard plastic in the direction of the arrow into the mould cavity in the left-hand portion only of the moulds. Fig. 14 is a diagrammatic sectional view showing the mould half of Fig. 13 after separation of the movable moulds of Fig. 11 and prior to rotation 180° to the right and in the direction of the arrow shown in Fig. 15. Fig. 15 is a diagrammatic sectional view showing the mould of Fig. 14 immediately after the 180° rotation and prior to closure of the movable mould half. Fig. 16 is a diagrammatic sectional view showing the mould halves of Fig. 15 after closure and illustrating the step of injecting hard plastic into the cavity on the left-hand end of the mould, and simultaneous injection of soft plastic into the right-hand end of the mould, which step is thereafter repeated during each cycle of the continuous process.

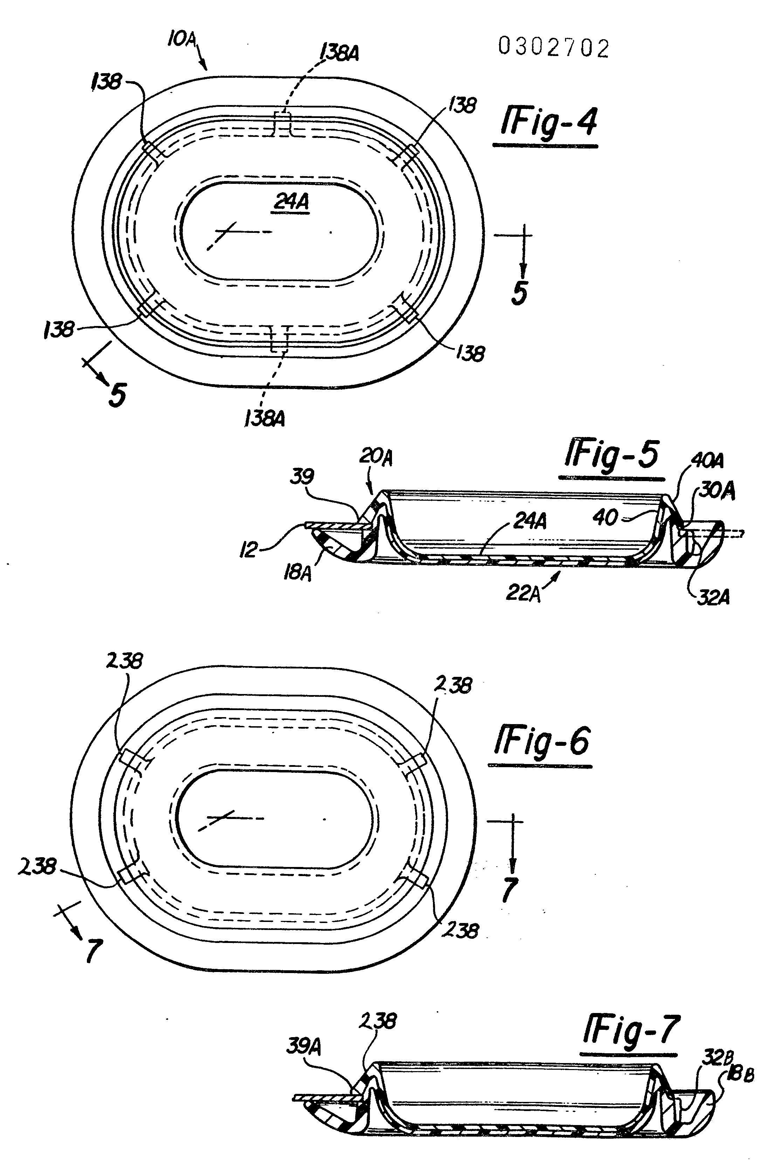

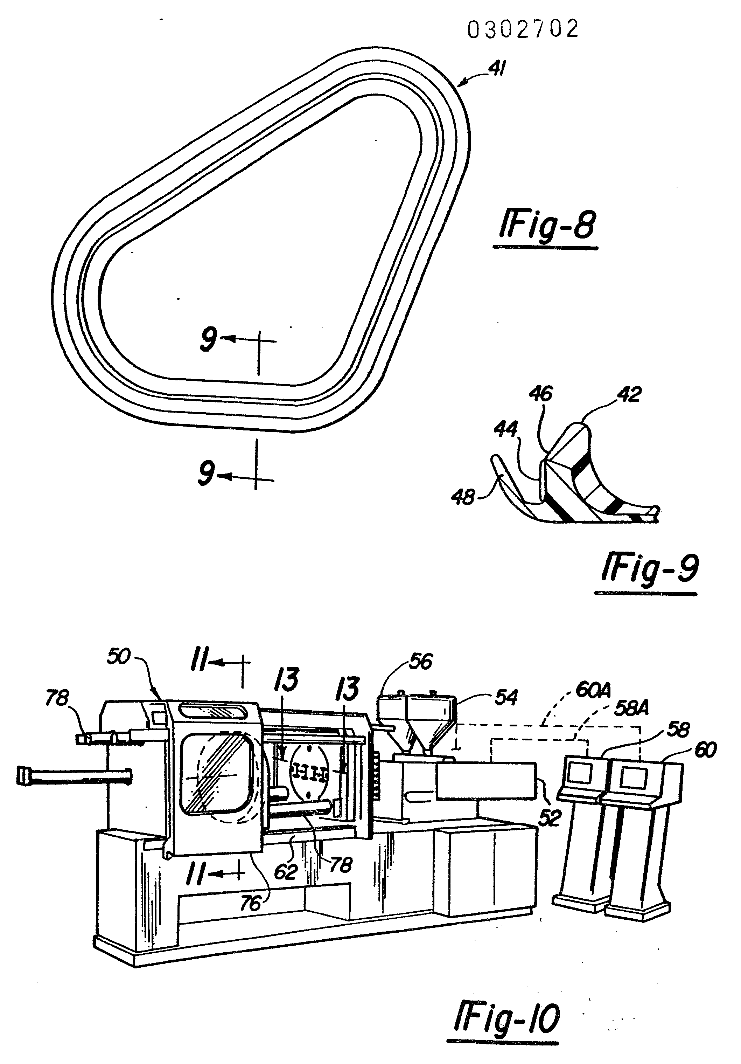

Figs. 2,4,6 and 8 illustrate various embodiments of a plug of the present invention and Figs. 4 and 8 represent embodiments primarily for use in door panels and floor panels of automobiles as explained in greater detail hereinafter.

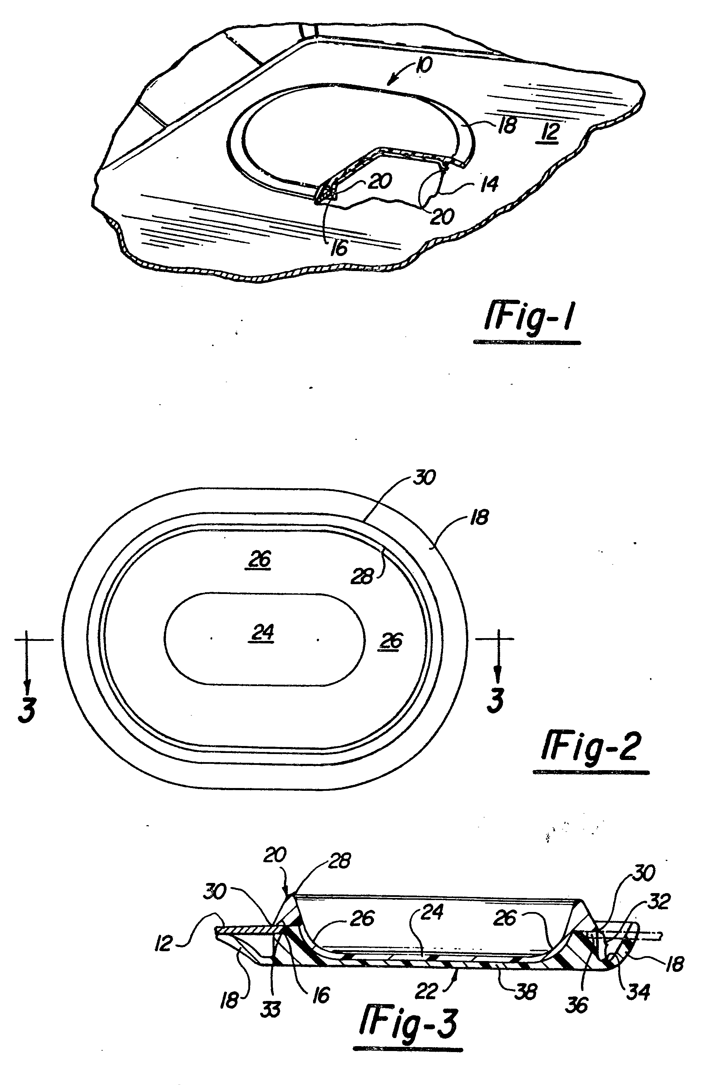

Fig. 1 illustrates one embodiment of a plug of the present invention when installed in an opening in a typical panel. The plug 10 is illustrated in detail in Figs. 2 and 3. A broken away portion 14 of a panel 12 is representative of, for example, a floor panel of an automobile with its top surface being the surface exposed in the passenger compartment. The panel 12 includes a broken away portion of a substantially oblong shaped opening 16 which is commonly provided for tool access so as to enable assembly operations during vehicle manufacture. The plug 10 entirely fills the opening 16, is locked in place and primarily seals the opening 16 by way of contact with the entire peripheral face of the opening in a manner further explained below. The plug 10 also provides a sealing contact by way of an external flange or wing portion 18 which is spaced outwardly from and surrounds the inner periphery of the opening 16. The plug 10 forms a substantially planar continuation of the upper surface of the floor panel 12 and is usually covered by a carpet, rubber mat or the like, and is thus unnoticeable. The hard, locking means protrude through the opening and face downwardly such that the entire surface of the plug that is exposed underneath the floor panel comprises the hard, hole-filling portion of the plug. Installation of the plug in the opening 16 is normally effected by inserting a tapered locking portion 20 into the opening 16 from the top surface of floor panel 12.

As further illustrated in Figs. 2 and 3, the plug 10 comprises a hard, locking and plugging/filling portion 20 and a softer, elastomeric, sealing and hole covering portion 22 (note the plug of Fig. 1 is illustrated up side down in Fig. 3). The materials which are suitable for forming the portions 22 and 20 will be described in detail below but, in general, each is a thermoplastic resinous material that can be injected in molten condition into mould cavities of appropriate configuration and the materials are sufficiently chemically similar such that upon cooling the hard and soft materials unite and bond the materials in contact to form a unitary plug.

The locking portion 20 is generally oval and comprises a hole filling central portion 24 which is substantially planar and which curves smoothly 26 towards the panel 12 and terminates in a tapering, generally elliptical annular ring, which is triangular in cross-section, and which has an upper surface 28, and a ridge portion 30 at its outer circumferential lower edge (as shown in Fig. 3). As shown on the left hand side of Fig. 3, the lateral dimensions of the opening 16 of the panel 12 are slightly smaller than the lateral dimensions of the ridge portion 30 and, as assembled, the ridge portion 30 overlaps the external, or bottom, surface 33 of the panel 12 surrounding the opening 16 and thus locks on the panel 12 by direct contact with the entire peripheral region of the opening 16.

The manner in which plug 10 seals the opening 16 may be best understood by reference to the right side of Fig. 3, since the panel 12 is illustrated by a chain dotted line so that the as-moulded shape and location 36 of the elastomeric sealing portion 22 that is immediately adjacent to ridge portion 30 may be clearly seen. As shown the elastomeric portion 22 forms a sealing band surface indicated by the bracket 32, which portion 22 has the same, or approximately the same, circumferential dimension as ridge portion 30 and constitutes, approximately, an axial extension of the circumferential dimension of ridge portion 30 downwardly to a trough 34. When the hard, locking portion 20 is inserted into the opening 16, it is necessary to cock or skew the plug 10 since the circumferential dimension of ridge portion 30 is larger than opening 16 and locking portion 20 is hard and too rigid and resistant to radial compression to enable direct insertion in the axial direction. As such, the plug 10 is similar to the grommet 10 of US- A- 4 081 879, as illustrated in Figs. 1,6 and 7 of that document. In brief, part of the ridge portion 30 of the plug 10 is inserted in the opening 16, and by the application of a force in a direction generally parallel to the plane of the surface 12, the portion 36 of the sealing band surface 32 immediately contiguous the ridge portion 30 is deflected, or compressed, sufficiently to allow the opposite portions of the ridge portion 30 to deflect, at the points of contact with the inner periphery of opening 16, so as to snap through and become inserted as illustrated at the left hand side of Fig. 3. When this snap-in occurs, as it normally does with plugs designed to overlap the peripheral region of the opening 16 by only a few thousandths of an inch (tenths of a millimetre) and with the ridge portion 30 having a predetermined hardness so as as to allow for the required, small, radial deflection, a tight pressurised interference seal is established by contact between a portion of elastomeric sealing band surface 32 and the inner surface of the peripheral region of the opening 16. This sealing results from a combination of the resilience of the material of the sealing portion 22 and the forces which result from the harder stronger ridge portion 30 placing a tension or stretching force on the elastomeric material that is distorted into a compressed assembled position as illustrated in the left side of Fig. 3.

The sealing portion 22 comprises a central portion 38 which overlies, and is bonded and unitary with, the central portion 24 of locking portion 20, and includes at its periphery an upwardly and outwardly extending wing portion 18. The wing portion 18 is shown, as moulded, in the right side of Fig. 3 and is shown in its flattened, or deflected, secondary sealing position, after installation in the opening 16 of the panel 12 at the left side of Fig. 3. The wing portion 18, in addition to sealing by resilient pressure contact with the flat surface of panel 12 surrounding opening 16 also functions so as to prevent dislodgement of plug 10 due to forces applied downwardly on central surface 38 such as, for example, the force of a passenger's heel applied directly on the plug 10 in the floor panel of a vehicle. As such, the resistance to deflection of the central portion 24 and its bonded unity with the overlying resilient central portion 38, and resulting wedging forces, constitute the major resistance to downward dislodgement of the plug. However, the wing portion 18 also significantly resists such dislodgement. The construction of the wing portion 18 and the portion of sealing band surface 32 underlying the inner end of the panel 12 as shown in Fig. 3, is sufficient, not withstanding their elastomeric properties, to resist the compression that would be required for the plug 10 to pass through the opening 16.

A modified plug 10A is shown in Figs. 4 and 5. The hard sealing portion 20A of the plug of Figs. 4 and 5 is modified relative to the plug of Fig. 2 so as to provide increased locking surface interference with the flat surface of panel 12 surrounding the opening 16 and thus greater resistance to dislodgement of larger sizes of plugs, or plugs subjected to rigorous use. The plug 10A of Fig. 4 is also modified so as to enhance sealing. As best illustrated in Fig. 4, a hard locking portion 20A includes a plurality of circumferential spaced buttress-type reinforcing projections 138 moulded integrally into the annular locking ring 20A. As shown four buttress members 138 are located on the curving end portions of the locking ring 20A however, the locations and number of buttress members may be varied as required, for example, to include additional buttresses 138A, shown by way of dotted lines, to enhance resistance to dislodgement from forces applied to the central portion 24A, for example road surface particle thrown into contact with the underside of the plug 10A during vehicle operation, or the like. One buttress member 138 is shown in cross-section on the left side of Fig. 5. The shape and degree of outward projection from the tapered outer surface of locking ring 20A increases from the top to the bottom of that ring, to a maximum degree at the lower end portion 39 of the buttress 138. The outer dimension of the projection at the outer edge of ridge portion 30A may be seen by comparing the overlap of lower end portion 39 with the top surface of the panel 12 at the left side of Fig. 5 with the outer dimension of the ridge portion 30A that is visible on the right side of Fig. 5. The additional outward projection 39 provides extra overlap with the adjacent surface of the panel 12 when installed and this added overlap increases the resistance to dislodgement resultant from concentrated forces that may be applied from beneath panel 12 and toward the end portions of plug 10A. The locking portion 20A is also modified from the solid cross-sectional triangular shaped ring construction shown in Fig. 3 to the V-shaped dual leg construction 40,40A best illustrated at the right side of Fig. 5. This modification, particularly in large plugs, is useful for reducing the transverse rigidity of the plug and can assist in reducing the force required to insert such a plug in the opening. The sealing modification to the plug 10A is best illustrated by the right side of Fig. 5. The ridge portion 30A extends slightly less in its circumferential edge dimension than the outer dimension of the contiguous sealing band surface 32A. It is thus apparent that an additional degree of radial compression of the circumference of sealing band surface 32A occurs during installation, as the inner end of the panel 12 contacts and compresses the resilient material contiguous to and protruding outwardly from the ridge portion 30A. These two modifications make the plug structure shown in Fig. 4 preferable for use in conditions that require greater resistance to dislodgement and improved sealing, for example, in larger plugs in the floor panels of trucks, or the like.

The plug of Figs. 6 and 7 illustrates a modification of the plug of Fig. 2 so as to include buttresses 238 identical to the buttresses 138 shown in Fig. 4 but which plug does not include any modification of the sealing band surface 32 of the plug of Fig. 2 as apparent in Fig. 5.

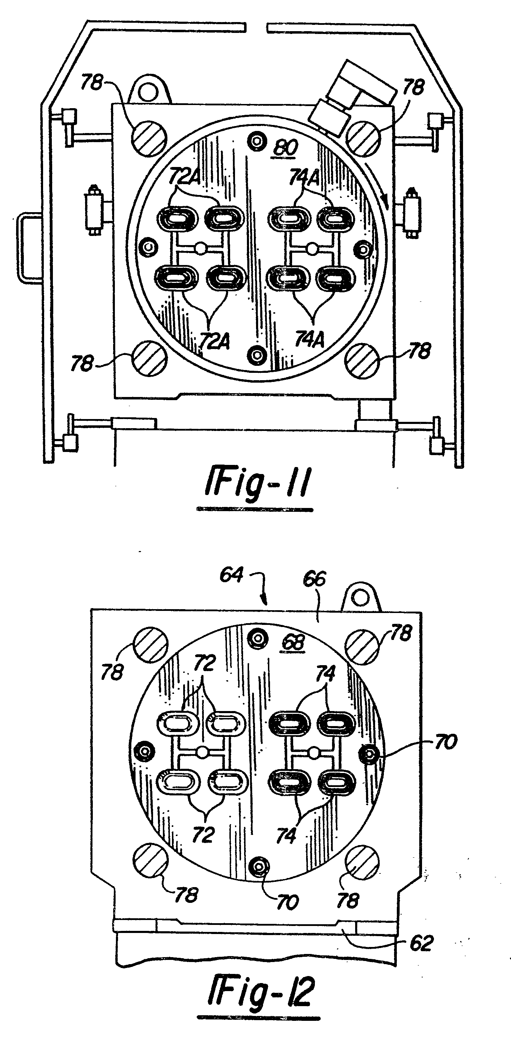

Another embodiment of a plug according to the present invention is illustrated in Figs. 8 and 9. This substantially triangular shaped plug 41 is adapted to fill and seal a tool access opening in an automobile door, provided for enabling installation of an outside rear view mirror. The plug is installed in the door panel forming the inner side of the door and at a location adjacent to the door hinge and is thus visible only when the door is opened. The plug 41 comprises an annular locking ring portion 42 having a similar triangular shaped, solid cross-sectional form to that of corresponding locking portion 20 of Fig. 3. The plug 41 also includes a sealing band surface 44 which has approximately the same circumferential edge dimension as that of the outer circumferential edge of a ridge portion 46 of the ring portion 42, and provides an axial continuation of that ridge portion. A wing portion 48 is generally similar to the wing portion 18 of the plug 10 of Fig. 3, and the plug 41 is installed, so as to provide a locking and automatic sealing action upon installation, as described above for the plug 10 as shown in Fig. 2.

As noted above, the conditions of anticipated use of the plugs of this invention, particularly in vehicle manufacture, are demanding and rigorous and safety considerations require that the plugs possess physical and mechanical properties that heretofore have been available only in metal plugs, usually formed of steel, or aluminium. For example, the plugs must remain self-locked in place at temperature ranging from -40°F (-40°C) through to 260°F (127°C) for extended time periods, such as up to about 100 hours, and remain sealed in the opening and prevent water leakage at the end of such temperature period when subjected to a 10 minute static leak test conducted at room temperature, that is, about 70-75°F (21-24°C) and using a six inch (15.24 cm) head pressure of water. Such plugs must resist dislodgement from the floor pan opening when subjected to a minimum push out force of 75 to 100 pounds (33 to 45 kg), applied to the approximate centre of the hole-filling portion in the direction opposite to, and in a second test in a direction the same as, the direction in which force was applied to insert, or snap, the plug in place. Such floor pan plugs must also have sufficient tensile and impact strength to resist puncture or penetration by stones or other projected objects encountered as the vehicle passes over unpaved, uneven roads, and must also resist undue deformation due to expansion or contraction as a result of temperature changes and further provide resistance, for a minimum period of at least five years, to weak acidic or alkaline solutions which may be splashed against the outer surface of the plug.

It has been found that a single combination of two types of thermoplastic resinous materials possess all of the physical and mechanical properties that are required for forming satisfactorily functional plugs according to the present invention and also provides two materials that are mechanically compatible to a sufficient degree so as to enable the forming of the unitary plugs of the present invention by co-injection into a multi-cavity mould. The type of thermoplastic resinous materials suitable for use in forming the hard, hole-filling, locking portion of the plugs of the present invention comprises a polyolefin resin, preferably polypropylene, having a durometer hardness reading in the range of about 60 to about 110 on the Rockwell R scale as measured by ASTM Method D785 for Rockwell Hardness of Plastics and Electrical Insulating Materials. The best known material for use in forming the hard, locking portion of the plugs of the present invention is a polypropylene resin-based material reinforced with glass fibres in an amount of about 8% to about 32%, and preferably 10% ± 2%, by weight of glass fibres, balance polypropylene, which material after injection moulding forms a hard locking portion having a hardness reading in the range of about 75 to about 100 on the R scale, ASTM Method D785.

The best known glass fibres for use are chopped strands having lengths of about 1/8" (0.32cm) to about 1/4" (0.64cm). Such fibres have a typical range of diameter to length ratio of about 2 to 20, and preferably about 3 to 16. A number of general purpose polypropylene materials may be satisfactorily used, and are available from a number of suppliers in the United States, including Hercules' Himont polypropylene general purpose resins designated Pro-Fax 6323 and 6523, polypropylene homopolymer from Exxon, Gulf or Amoco.

One type of thermoplastic resinous material suitable for use in forming the softer sealing portion of the plugs of the present invention is a thermoplastic elastomeric material essentially comprising a blend of thermoplastic crystalline polyolefin resin and monoolefin copolymer rubber and having a durometer hardness reading in the preferred range of about 64 Shore A to about 50 Shore D. For certain uses having less rigorous requirements with regard to both strength and sealing, the hardness range can satisfactorily be about 55 Shore A to about 55 Shore D, ± 10%. Suitable compositions of this type are disclosed and described in US- A- 4 130 535 and US- A- 4 311 628. The preferred crystalline polyolefin resin in the blend is polypropylene and the cured monoolefin copolymer rubber in the blend is known generally in the trade as EPDM rubber, which can be satisfactorily cured either with sulfur or peroxide curatives, and preferably is cured with a phenolic curative as disclosed in US- A- 4 311 628. Such EPDM rubbers are commercially available in the United States from Monsanto Chemical Company under the trademark Santoprene rubber. A number of satisfactory plugs according to the present invention and having the configuration illustrated in Fig. 8, have been made by using a polypropylene homopolymer resin-chopped glass fibre reinforced material containing 10% by weight of 1/8" (0.32cm) length chopped glass fibres for the hard locking portion obtained from Rhetech Company under the trade designation G 10P100, and a Santoprene® thermoplastic rubber for the soft sealing portion by using Santoprene® rubber designated 101-64, which is a black general purpose Santoprene® rubber having a hardness of 64 Shore A.

The plugs of the present invention are preferably made by a continuous co-injection method by using an injection machine of the type shown in Figs. 10,11 and 12 and the sequence of steps diagrammatically illustrated in Figs. 13 to 16 as will now be described in detail. The machine shown in Figs. 10,11 and 12 is a commercially available injection moulding machine having two independently controlled horizontal injection units and is capable of injecting two different materials from its injection units into a plurality of moulds, automatically in a continuous cycle. The machine is manufactured by John Brown Co. and is available in the United States from Negri Bossi S.p.A. of Milan, Italy. As illustrated in Fig. 10, the machine 50 comprises a pair of horizontal injection units which are of conventional form and are indicated only diagrammatically at 52. Separate plastic feed bins 54,56 are interconnected to the separate injection units 52 and supply the hard polypropylene resinous material to the near side injection unit and the softer Santoprene EPDM rubber material to the far side injection unit (not shown). The injection units are independently controlled by electronic control units of conventional type with a control means 58 effecting control for the near side injection unit through connecting means 58A, and a control means 60 effecting control of the far side injection unit through connecting means 60A. Fixed mould support means 64 are mounted on the machine bed 62 as shown in Fig. 12, and comprise a mould support plate 66 and a mould 68 which is fixed to the support plate 66 by a plurality of bolts 70. As illustrated, the mould 68 is provided with eight cavities. The four cavities 72 on the left side (as shown in Fig. 12) of the mould 68 having a configuration which forms the hard, hole-filling, locking portion of the plug 10 upon cooling of the injected harder thermoplastic material. The four cavities 74 in the right half (as shown in Fig. 12) of the mould 68, have a configuration which forms the soft sealing portion of the plug 10 when the molten injected softer thermoplastic material is cooled. Horizontally movable mould support means 76 is mounted on the left end (as shown in Fig. 10) of a bed 62 and supports the mould 68 which may be reciprocated from the open position shown in Fig. 10, to the right side of the bed 62 by way of the upper and lower support rods 78 and into a closed position in which the mould 80, shown by way of the circular dotted line in Fig. 10 and by way of a front view in Fig. 11, is in direct sealed contact with the mould 68. The mould 80 is provided with the other half 72A,74A of each of the mould cavities 72,74 that are mounted in fixed mould 68. When the moulds 68 and 80 are in the closed position the plastic materials in the injection units 52 are injected into cavities in accordance with a cyclical sequence which is diagrammatically illustrated in Figs. 13 to 16. Figs. 13 to 16 illustrate the interfitting of the cavities which are supported by the mould halves 68 and 80 as each step of the cycle of movements of the machine 50 occurs, and it should be understood that the open and closed positions of the mould halves and the juxtaposition of the cavities is merely a diagrammatic representation of only one pair of mould cavities out of the four pairs shown in Figs. 11 and 12.

After an initial start up, the process is continuous and in each injection step, hard plastic is injected into the cavities 72A on mould 80 and simultaneously, softer elastomeric plastic is injected into the cavity 74 which forms the sealing portion of the plug. However, in order to prepare for injection of the soft material which will overlie and contact the hard locking portion it is necessary to juxtapose the cavity 74 with a mould cavity 74A which contains a previously cooled hard portion of the plug. Since each side by side injection unit 52 contains only the hard plastic, or alternatively, the soft plastic material, and injection of the hard material must be into an empty mould, the process requires that the mould cavities on the mould 80 that have been injected in the previous cycle, are rotated from the position of the cavities 72A on the left half of the mould 80 as seen in Fig. 11, to the right half position of the cavities 74A as seen in Fig. 11. This is accomplished by a 180° rotation of the mould 80 about its horizontal axis after the movable support 76 begins to move horizontally to the left as seen in Fig. 10, to separate the moulds.

Figs. 13 to 16 show all the steps of the cycle, from the initial start-up step to continuous production. At start-up, in the first step, with the moulds 80 and 68 in closed position, hard plastic is injected into the cavity defined by the mould halves 72A and 72 through a sprue 801, and is cooled slightly to form hard, locking portion 82, as shown in Figs. 13, 14. Next, the mould support means 76 moves horizontally to the left carrying mould 80 to its open position, as shown in Figs. 10 and 14. During this horizontal separation, the mould 80 is preferably actuated to rotate 180° in a clockwise direction as illustrated by the arrow shown in Fig. 15 so as to position the hard, locking portion 82 in the cavity on the right side of the mould 80 as shown in Fig. 15. Alternatively, the commencement of rotation can be delayed until the mould 80 reaches its open position. The mould support means 76 then moves horizontally so as to again place the mould cavities 72A,74A into juxtaposition with the fixed mould cavities 72,74 on the mould 68.

As shown in Fig. 16, with the moulds 68,80 juxtaposed, the soft plastic is injected through the sprue 83, into the mould cavity in the mould half 74 so as to form the sealing portion 84 of the plug. Simultaneously, hard plastic is injected into the cavity in mould half 72A so as to form, upon cooling, the hard portion 82 of the plug. The simultaneous cooling of the contiguous portions 82 and 84 in the mould half 74 occurs while the moulds 68, 80 are in a closed position and requires a short time, for example 1 to 5 seconds. The mould support means 76 then moves to the left (in Fig. 10) following the cycle of injection shown in Fig. 16, and the completed unitary plug 82,84 is ejected from the mould 80 preferably at the fully-opened position shown in Fig. 15. The mould 80 is then rotated 180° about its horizontal axis, which is the same axis as the axis of movement of the mould 80 to its open position. Alternatively, as indicated above with respect to start-up, the rotation may occur as the mould 80 is moving toward its open position, with ejection occurring in the right side position, if desired. In either case, ejection ensures that an empty mould 72,72A is ready for injection of molten hard plastic material when the mould half 80 next moves to its closed mould position. Repetition of the steps illustrated in Figs. 16 and 15 thereafter provides a continuous process.

The above described process has a number of advantages over other processes by which the plugs of the present invention could be manufactured. For example, the plugs 10 could be made in separate moulds. In this manner the hard portion 82 is first made in a single cavity mould, cooled, ejected and then placed by hand into a second mould which is configured to receive the cooled hard portion and to enable injection of the softer material to overlay the hard portion and form the soft portion 84. However, such a process does not ensure that the hard and soft portions will be bonded into a unitary article at the interface between the hard and soft portions of the plug. Satisfactory bonding is attainable, however, by using an adhesive applied in a thin layer on the cooled interface surfaces of the hard portion before positioning it in the second mould and a wide variety of suitable adhesives known to those skilled in the thermoplastic materials injection moulding art may be satisfactorily employed for that purpose. Moreover, such a two mould process is less efficient in time, and more costly with regard to labour and materials than the above described continuous co-injection process of the present invention.

In practicing the preferred co-injection process of the present invention it has been found to be desirable to control the degree of cooling of the hard portion 82 prior to injecting the molten soft thermoplastic material to form soft portion 84 so as to ensure that the hard and soft portions bond and unite into a unitary plug.

Excellent bonding and unity of the hard and soft plug portions is obtained by injecting the molten polypropylene-based resin material into its cavity at a temperature in the range of about 370-400°F (188-204°C) and preferably 380-390°F (193-199°C) and cooling the injected hard portion only to a partially solidified state sufficient to maintain its shape while positioned in the mould at a temperature in the range of about 320-340°F (160-171°C) and preferably 325-335°F (163-168°C). A suitable injection temperature for the selected Santoprene soft portion material is in the range of about 370-420°F (188-215°C) and preferably 375-390°F (190-199°C) and results in high quality unitary products, particularly when the temperature of the hard portion is within the above stated ranges.

The temperature of hard portion 82 at the time the soft thermoplastic material is injected into its mould portion contiguous to the partially solidified hard portion is preferably the highest temperature that permits the slightly cooled hard portion to maintain its form when the hot, softer thermoplastic material is injected into contact with the cooled hard portion 82. This temperature will vary somewhat with the specific composition of the thermoplastic material being used for the hard part of the plug of the present invention. In general, the higher the quantity of polyolefin that is polypropylene, in contrast to polyethylene or mixtures thereof, the higher the temperature at injection and thus the higher the necessary temperature the cooled portion will be in order to retain its form when the Santoprene material is injected. Similarly, as the glass fibre content increases, the effective melting temperature also increases. As is readily apparent to those skilled in the art of injection moulding, it is desirable to keep the cooling time for both portions 82,84 as short as possible in order to maximise the rate of production and thus overall economy. Selection of such parameters, and the best materials to suit the performance requirements of particular applications is readily and easily performed by using the specific materials and the general guidelines noted hereinbefore.

## Claims

1. A self-locking and sealing plug for filling and sealing an opening in a panel comprising a filling and locking portion and a sealing portion united and bonded together, said filling and locking portion having a central portion (24) which terminates at its periphery in an annular locking portion (20), characterised in that said locking portion (20) has a continuous laterally and axially extending ridge portion (30) which has a shape substantially similar to, and a lateral dimension larger than, said opening, said ridge portion (30) tapers inwardly from said lateral dimension toward a narrow portion (28) which has a lateral dimension smaller than said ridge portion (30), said sealing portion has a central surface portion (22) which overlays said central portion (24) of said locking portion (20), said central surface portion (22) terminates at its periphery in an annular wing portion (18) and adjacent its periphery comprises a sealing band surface (32) located adjacent its periphery, which surface forms an axially extending continuation of said axially extending ridge portion (30), said annular wing portion (18) extends outwardly and towards the panel from said sealing band surface (32) and forms a secondary seal with the surface surrounding said opening when said plug is installed in the panel opening, said filling and locking portion comprises a thermoplastic polyolefin resinous material having a durometer hardness reading in the range of about 60 to about 110 Rockwell R, and in that said sealing portion comprises a thermoplastic elastomeric material comprising thermoplastic crystalline polyolefin resin and cured monoolefin copolymer rubber and having a durometer hardness reading in the range of about 55 Shore A to about 55 Shore D.

2. A plug as claimed in claim 1, wherein the material forming said locking portion comprises a polypropylene resin-based material.

3. A plug as claimed in claim 1, wherein the material forming said locking portion comprises glass fibre reinforcedd polypropylene resin.

4. A plug as claimed in claim 1, wherein the material forming said locking portion comprises a glass fibre filled polypropylene resin in which the glass fibres are chopped strand having a fibre length of less than 1/4" (6.2mm) and are present in an amount substantially between 8% and 32% by weight of said polypropylene resin.

5. A plug as claimed in any of claims 1 to 4, wherein the material forming said sealing portion comprises polypropylene and cured ethylene propylene diene rubber.

6. A plug as claimed in claim 5, wherein said cured ethylene propylene diene rubber is cured with phenolic curative.

7. A plug as claimed in any of the preceding claims, wherein said locking portion comprises a plurality of buttress-shaped reinforcing projections formed integral with said annular locking portion and located in spaced apart positions on the lateral peripheral regions thereof, said buttress-shaped projections extend angularly outwardly from said narrow portion and from said tapering surface of said locking portion and terminate at said ridge portion and the lateral peripheral edge of said buttress projects outwardly from said ridge portion.

8. A plug as claimed in claim 7, wherein said sealing band surface has a lateral dimension larger than said ridge portion and smaller than the outer lateral dimension of said buttress-shaped projections.

9. A method for making a plug defined by the details of claim 1 characterised by;
providing injection moulding means having a pair of injection units wherein the first of said units contains molten thermoplastic polyolefin resinous material having, when solidified, a durometer hardness reading at ambient temperature in the range of about 60 to about 110 Rockwell R, and the second of said units contains molten thermoplastic elastomeric material consisting of a blend of thermoplastic crystalline polyolefin resin and cured monoolefin copolymer rubber and having, when solidified, a durometer reading at ambient temperature in the range of about 64 Shore A to about 50 Shore D;
providing first mould means comprising a plurality of cavities configured to form said filling and locking portion of said plug when injected with said molten thermoplastic material from said first injection unit;
providing second mould means comprising a plurality of cavities configured to form said sealing portion of said plug when injected with said molten thermoplastic material from said second injection unit;
locating said second mould means adjacent to said first and said second injection units and connecting said second mould means to each of said units so as to enable injection of said thermoplastic materials from said units into said first and said second moulds when said first mould means is juxtaposed to and in engagement with said second mould means;
moving said first mould means between a closed position in which said first mould means is juxtaposed to and in engagement with said second mould means, and an open position in which said first mould means is spaced from said second mould means, said first mould means being rotatable about the axis along which said first mould means moves between

_Fig-1_

_Fig-2_

_Fig-3_

0302702

_Fig-4_

10A
138
138A
138
24A
5
138
138
5
138A

_Fig-5_

39
20A
40A
40
30A
24A
12
18A
22A
32A

_Fig-6_

238
238
238
238
7
238
7

_Fig-7_

238
39A
32B
18B

0302702

IFig-8

IFig-9

IFig-10

0302702

_Fig-11_

_Fig-12_

74A

72A

72 82

801

74

_Fig-13_

74A

72A

82

74

72

_Fig-14_

74A

72A

82

74

_Fig-15_

84

74A

74A

72A

74

83

72

801

_Fig-16_